# EUROPEAN PATENT APPLICATION

(11) **EP 4 782 290 A1**
(43) Date of publication of application: **29.07.2026**
(21) Application number: 24869765.8
(22) Date of filing: 22.05.2024
(51) Int. Cl.: B60W 30/06

(54) **AUTO PARKING METHOD AND APPARATUS, AND INTELLIGENT DRIVING DEVICE**

(30) Priority: 28.09.2023 CN 202311283997
(71) Applicant: Yinwang Intelligent Technologies Co., Ltd., Shenzhen, Guangdong 518110 (CN)
(72) Inventor: WANG, Zhikai, Shenzhen, Guangdong 518129 (CN); SHEN, Yujie, Shenzhen, Guangdong 518129 (CN); MENG, Han, Shenzhen, Guangdong 518129 (CN); LIN, Yubin, Shenzhen, Guangdong 518129 (CN); MA, Xiaokang, Shenzhen, Guangdong 518129 (CN); ZHANG, Lianghe, Shenzhen, Guangdong 518129 (CN); ZHANG, Yu, Shenzhen, Guangdong 518129 (CN); TONG, Liuzhu, Shenzhen, Guangdong 518129 (CN)
(74) Representative: Gill Jennings & Every LLP
(86) International application number: PCT/CN2024/094645
(87) International publication number: WO 2025/066199

(57) **Abstract**

An auto parking method and apparatus, and an intelligent driving device are provided. The method includes: in a process in which an intelligent driving device travels along a planned path on a road section, when the intelligent driving device is incapable of continuing traveling along the planned path within preset duration because the intelligent driving device is blocked by an obstacle, determining a target temporary parking area, where the target temporary parking area is located in a preset range of the intelligent driving device, and a distance between the target temporary parking area and a boundary of the road section is less than or equal to a preset threshold; and controlling the intelligent driving device to be parked into the target temporary parking area. The method may be applied to an intelligent vehicle like an electric vehicle or a new energy vehicle. In an auto parking process, when the intelligent driving device is blocked by the obstacle and cannot continue to travel along the planned path, a degree of obstruction to traffic can be reduced. After a traffic capacity of the road section is restored, the vehicle may be controlled to be pulled out of a temporary parking area to continue to travel. This helps improve intelligence of auto parking, and improve an auto parking success rate.

## Description

This application claims priority to Chinese Patent Application No. 202311283997.1, filed with the China National Intellectual Property Administration on September 28, 2023 and entitled "AUTO PARKING METHOD AND APPARATUS, AND INTELLIGENT DRIVING DEVICE", which is incorporated herein by reference in its entirety.

### TECHNICAL FIELD

This application relates to the field of intelligent driving, and more specifically, to an auto parking method and apparatus, and an intelligent driving device.

### BACKGROUND

Auto parking (auto parking, AP) means automatically parking a vehicle, that is, an autonomous driving system may semi-automatically or full-automatically help a user park the vehicle into a parking space. Auto parking may include auto parking assist (auto parking assist, APA), remote parking assist (remote parking assist, RPA), auto valet parking (auto valet parking, AVP), and the like.

When a current AVP controls a vehicle to be parked into a parking space, or controls the vehicle to travel to a location of a driver from the parking space, an auto parking procedure may be terminated due to an obstacle. As a result, the vehicle stays on a road and blocks traffic.

In view of this, there is an urgent need to develop an auto parking solution that can improve parking flexibility.

### SUMMARY

This application provides an auto parking method and apparatus, and an intelligent driving device, to reduce a degree of obstruction of the intelligent driving device to traffic in an auto parking process, and improve parking flexibility and intelligence of the intelligent driving device.

According to a first aspect, an auto parking method is provided. The method may be performed by an intelligent driving device, or may be performed by a computing platform in the intelligent driving device, or may be performed by a chip or a circuit in the intelligent driving device. This is not limited in this application.

The method includes: in a process in which the intelligent driving device travels along a first planned path on a first road section, when the intelligent driving device is incapable of continuing traveling along the first planned path within first duration because the intelligent driving device is blocked by a first obstacle, determining a first target temporary parking area, where the first target temporary parking area is located in a first range of the intelligent driving device, and a distance between the first target temporary parking area and a first boundary of the first road section is less than or equal to a first threshold; and controlling the intelligent driving device to be parked into the first target temporary parking area.

In some implementations, the first obstacle includes but is not limited to a road traffic participant that blocks the intelligent driving device from traveling and a general obstacle. The road traffic participant includes but is not limited to a motor vehicle, a non-motor vehicle, and a pedestrian. The general obstacle includes but is not limited to a triangular warning sign, a cone bucket, and a temporary sign.

In some other implementations, when a road is narrow, the first obstacle may alternatively be a road boundary that blocks the intelligent driving device from traveling.

For example, the first duration may be five seconds, seven seconds, or other duration. The first range may include a range within 10 meters of an outer contour of the intelligent driving device, or may be another range.

In the foregoing technical solution, in an auto parking process, when the intelligent driving device is blocked by an obstacle and cannot continue to travel along a planned path, the intelligent driving device may be controlled to be parked into a temporary parking area on a roadside, to reduce a degree of obstruction to traffic and improve parking flexibility and intelligence of the intelligent driving device.

With reference to the first aspect, in some implementations of the first aspect, the method further includes: obtaining information about one or more temporary parking areas, where the one or more temporary parking areas are located in the first range of the intelligent driving device, and a distance between each of the one or more temporary parking areas and the first boundary is less than or equal to the first threshold. Determining the first target temporary parking area includes: determining the first target temporary parking area from the one or more temporary parking areas based on a location and/or a type of each temporary parking area, where the type of the temporary parking area indicates whether the temporary parking area is determined based on a parking space structure line.

For example, when a parking space is a road parking space, the parking space structure line is a parking space line. When the parking space is a mechanical parking space, the parking space structure line is a protruding edge at a boundary of the mechanical parking space.

In some implementations, a degree of obstruction of the temporary parking area to traffic of the first road section is determined based on the location and/or the type of the temporary parking area, and then a temporary parking area with a low degree of obstruction to the traffic of the first road section is selected as the first target temporary parking area.

In some other implementations, when a plurality of temporary parking areas have little difference in degrees of obstruction to the traffic of the first road section, difficulty levels of parking the intelligent driving device into the temporary parking areas are determined based on locations and/or types of the temporary parking areas. Further, a temporary parking area with a low parking difficulty level is selected as the first target temporary parking area.

With reference to the first aspect, in some implementations of the first aspect, the one or more temporary parking areas include a first temporary parking area and a second temporary parking area, the first temporary parking area is a temporary parking area determined based on the parking space structure line, and the second temporary parking area is not a temporary parking area determined based on the parking space structure line. Determining the first target temporary parking area from the one or more temporary parking areas includes: determining the first temporary parking area as the first target temporary parking area.

In the foregoing technical solution, when there is an idle parking space and an idle non-parking space area near the road boundary, the idle parking space is determined as a temporary parking area. This helps reduce a degree of obstruction to the road traffic when the intelligent driving device is temporarily stopped.

With reference to the first aspect, in some implementations of the first aspect, the method further includes: when the intelligent driving device fails to be parked into the first target temporary parking area, determining a second planned path based on the obstacle on the first road section; and controlling the intelligent driving device to travel along the second planned path.

For example, that the intelligent driving device fails to be parked into the first target temporary parking area may include the following cases: Planning of a path from a current location of the intelligent driving device to the first target temporary parking area fails, or the intelligent driving device cannot travel into the first target temporary parking area in a target pose.

In the foregoing technical solution, when the intelligent driving device cannot be parked into the temporary parking area, a traveling path on the first road is planned for the intelligent driving device, and the intelligent driving device is controlled to travel. When the intelligent driving device cannot continue traveling, a path for traveling to the temporary parking area continues to be planned for the intelligent driving device based on this solution. In this way, in the auto parking process, switching between a plurality of types of path planning can be implemented, to help improve an auto parking success rate.

With reference to the first aspect, in some implementations of the first aspect, after the intelligent driving device is parked into the first target temporary parking area, the method further includes: controlling, based on the road boundary of the first road section, the intelligent driving device to travel into a first target pulling-out area, where the first target pulling-out area is used by the intelligent driving device to continue to travel on the first road section.

For example, the first target pulling-out area may be an area indicated by a target pulling-out pose.

In the foregoing technical solution, after the intelligent driving device is parked into the temporary parking area and a traffic capacity of the first road section is restored, the vehicle may be controlled to be pulled out of the temporary parking area to continue to travel. This helps improve intelligence of auto parking and improve an auto parking success rate.

With reference to the first aspect, in some implementations of the first aspect, the method further includes: when the intelligent driving device fails to travel into the first target pulling-out area, controlling the intelligent driving device to be parked into a second target temporary parking area, where the second target temporary parking area is located in a second range of the intelligent driving device, and a distance between the second target temporary parking area and a second boundary of the first road section is less than or equal to a second threshold.

In some implementations, the second target temporary parking area and the first target temporary parking area may be a same area, the second boundary and the first boundary may be a same boundary, the second range and the first range may be a same range, and the second threshold and the first threshold may be a same value.

In the foregoing technical solution, when the intelligent driving device cannot be parked into the target pulling-out area, the path for traveling to the temporary parking area continues to be planned for the intelligent driving device, and the intelligent driving device is controlled to travel. When the intelligent driving device cannot continue traveling, the path for traveling to the temporary parking area continues to be planned for the intelligent driving device based on this solution. After the intelligent driving device is parked into the temporary parking area, the intelligent driving device is controlled to be pulled out of the temporary parking area in a timely manner, and the intelligent driving device is controlled to continue to travel on the road. This helps improve an auto parking success rate.

With reference to the first aspect, in some implementations of the first aspect, the first planned path is any one of the following: a path indicating the intelligent driving device to travel from the current location to a target parking area, a path indicating the intelligent driving device to travel from the target parking area to a location of a driver of the intelligent driving device, or a path indicating the intelligent driving device to travel from a third temporary parking area to the target pulling-out area, where the third temporary parking area is an area in which the intelligent driving device is parked before the intelligent driving device travels along the first planned path.

In some implementations, the third temporary parking area and the first target temporary parking area may be a same area, and the target pulling-out area and the first target pulling-out area may be a same area.

According to a second aspect, an auto parking apparatus is provided. The apparatus includes: a determining unit, configured to: in a process in which an intelligent driving device travels along a first planned path on a first road section, when the intelligent driving device is incapable of continuing traveling along the first planned path within first duration because the intelligent driving device is blocked by a first obstacle, determine a first target temporary parking area, where the first target temporary parking area is located in a first range of the intelligent driving device, and a distance between the first target temporary parking area and a first boundary of the first road section is less than or equal to a first threshold; and a processing unit, configured to control the intelligent driving device to be parked into the first target temporary parking area.

With reference to the second aspect, in some implementations of the second aspect, the apparatus further includes an obtaining unit. The obtaining unit is configured to obtain information about one or more temporary parking areas, where the one or more temporary parking areas are located in the first range of the intelligent driving device, and a distance between each of the one or more temporary parking areas and the first boundary is less than or equal to the first threshold. The determining unit is configured to determine the first target temporary parking area from the one or more temporary parking areas based on a location and/or a type of each temporary parking area, where the type of the temporary parking area indicates whether the temporary parking area is determined based on a parking space structure line.

With reference to the second aspect, in some implementations of the second aspect, the one or more temporary parking areas include a first temporary parking area and a second temporary parking area, the first temporary parking area is a temporary parking area determined based on the parking space structure line, and the second temporary parking area is not a temporary parking area determined based on the parking space structure line. The determining unit is configured to determine the first temporary parking area as the first target temporary parking area.

With reference to the second aspect, in some implementations of the second aspect, the determining unit is further configured to: when the intelligent driving device fails to be parked into the first target temporary parking area, determine a second planned path based on the obstacle on the first road section. The processing unit is further configured to control the intelligent driving device to travel along the second planned path.

With reference to the second aspect, in some implementations of the second aspect, after the intelligent driving device is parked into the first target temporary parking area, the processing unit is further configured to control, based on a road boundary of the first road section, the intelligent driving device to travel into a first target pulling-out area, where the first target pulling-out area is used by the intelligent driving device to continue to travel on the first road section.

With reference to the second aspect, in some implementations of the second aspect, the processing unit is further configured to: when the intelligent driving device fails to travel into the first target pulling-out area, control the intelligent driving device to be parked into a second target temporary parking area, where the second target temporary parking area is located in a second range of the intelligent driving device, and a distance between the second target temporary parking area and a second boundary of the first road section is less than or equal to a second threshold.

With reference to the second aspect, in some implementations of the second aspect, the first planned path is any one of the following: a path indicating the intelligent driving device to travel from a current location to a target parking area, a path indicating the intelligent driving device to travel from the target parking area to a location of a driver of the intelligent driving device, or a path indicating the intelligent driving device to travel from a third temporary parking area to a target pulling-out area, where the third temporary parking area is an area in which the intelligent driving device is parked before the intelligent driving device travels along the first planned path.

According to a third aspect, an auto parking apparatus is provided. The apparatus includes: a memory, configured to store a computer program; and a processor, configured to execute the computer program stored in the memory, to enable the apparatus to perform the method according to any possible implementation of the first aspect.

According to a fourth aspect, an intelligent driving device is provided, and the intelligent driving device includes the apparatus according to any possible implementation of the second aspect or the third aspect.

With reference to the fourth aspect, in some implementations of the fourth aspect, the intelligent driving device is a vehicle.

According to a fifth aspect, a computer program product is provided. The computer program product includes computer program code. When the computer program code is run on a computer, the computer is enabled to perform the method according to any possible implementation of the first aspect.

It should be noted that the computer program code may be completely or partially stored in a first storage medium. The first storage medium may be encapsulated with a processor, or encapsulated separately from a processor.

According to a sixth aspect, a computer-readable medium is provided. The computer-readable medium stores instructions. When the instructions are executed by a processor, the processor is enabled to implement the method according to any possible implementation of the first aspect.

According to a seventh aspect, a chip is provided. The chip includes a circuit, and the circuit is configured to perform the method according to any possible implementation of the first aspect.

### BRIEF DESCRIPTION OF DRAWINGS

FIG. 1 is a functional block diagram of an intelligent driving device according to an embodiment of this application;
FIG. 2 is a diagram of an architecture of a system required for implementing an auto parking method according to an embodiment of this application;
FIG. 3 is a schematic flowchart of an auto parking method according to an embodiment of this application;
FIG. 4 is another schematic flowchart of an auto parking method according to an embodiment of this application;
FIG. 5 is a diagram of an application scenario of an auto parking method according to an embodiment of this application;
FIG. 6 is a diagram of another application scenario of an auto parking method according to an embodiment of this application;
FIG. 7 is another schematic flowchart of an auto parking method according to an embodiment of this application;
FIG. 8 is another schematic flowchart of an auto parking method according to an embodiment of this application;
FIG. 9 is a block diagram of an auto parking apparatus according to an embodiment of this application; and
FIG. 10 is another block diagram of an auto parking apparatus according to an embodiment of this application.

### DESCRIPTION OF EMBODIMENTS

To facilitate understanding of technical solutions in embodiments of this application, concepts in this application are first described.

"Trapped" indicates a state in which an intelligent driving device is blocked by an obstacle and cannot travel smoothly.

"Escape" indicates that an intelligent driving device escapes from a state in which the intelligent driving device is blocked by an obstacle and cannot travel smoothly, so that the intelligent driving device can continue to travel.

Parking cruise indicates a state in which an intelligent driving device travels at a low speed when a target parking location is not determined. Alternatively, parking cruise indicates a state in which an intelligent driving device travels at a low speed when the intelligent driving device is far away from a target parking location after the intelligent driving device determines the target parking location.

The following describes technical solutions of embodiments of this application with reference to accompanying drawings.

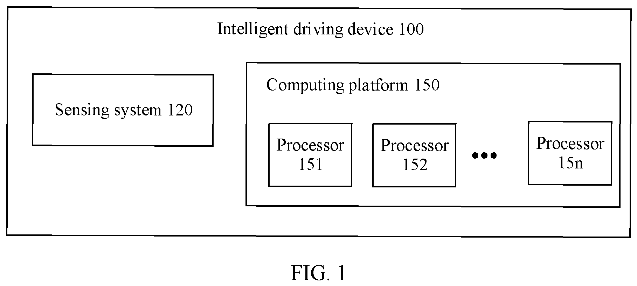

FIG. 1 is a functional block diagram of an intelligent driving device according to an embodiment of this application. As shown in FIG. 1, the intelligent driving device 100 may include a sensing system 120 and a computing platform 150. The sensing system 120 may include several sensors configured to sense information about an environment around the intelligent driving device 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a lidar, a millimeter-wave radar, an ultrasonic radar, and a camera apparatus.

Some or all functions of the intelligent driving device 100 may be controlled by the computing platform 150. The computing platform 150 may include processors 151 to 15n. The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field-programmable gate array (field-programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The intelligent driving device 100 may include an advanced driving assistant system (advanced driving assistant system, ADAS). The ADAS obtains information around the intelligent driving device by using a plurality of sensors (including but not limited to a lidar, a millimeter-wave radar, an image shooting apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and driver monitoring/reminding, so as to improve driving safety, automation, and comfort of the intelligent driving device.

In terms of logical functions, the ADAS system generally includes three main functional modules: a sensing module, a decision-making module, and an execution module. The sensing module senses an ambient environment of a vehicle body through the sensor, and inputs corresponding real-time data to a processing center at a decision-making layer, and the sensing module mainly includes a vehicle-mounted camera, an ultrasonic radar, a millimeter-wave radar, a lidar, or the like. The decision-making module makes a corresponding decision by using a computing apparatus and an algorithm based on information obtained by the sensing module. After receiving a decision-making signal from the decision-making module, the execution module takes a corresponding action, for example, driving, changing a lane, steering, braking, or warning.

Under different autonomous driving levels (L0 to L5), the ADAS may implement different levels of autonomous driving assistance based on information obtained by using an artificial intelligence algorithm and a plurality of sensors. The foregoing autonomous driving levels (L0 to L5) are based on a grading standard of the society of automotive engineers (society of automotive engineers, SAE). The level L0 indicates no automation, a level L1 indicates driving assistance, a level L2 indicates partial automation, a level L3 indicates conditional automation, a level L4 indicates high automation, and the level L5 indicates full automation. Tasks of monitoring and responding to road conditions at levels L1 to L3 are jointly completed by a driver and a system, and the driver needs to take over a dynamic driving task. Levels L4 and L5 enable the driver to be completely transformed into a passenger. Currently, functions that can be implemented by the ADAS mainly include but are not limited to adaptive cruise, auto emergency braking, auto parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the foregoing functions may have specific modes at the different autonomous driving levels (L0 to L5). A higher autonomous driving level corresponds to a more intelligent mode. For example, auto parking may include APA, RPA, AVP, and the like. For the APA, the driver does not need to control a steering wheel, but still needs to monitor a status of the intelligent driving device on the intelligent driving device in real time. For the RPA, the driver may use a terminal (for example, a mobile phone) to remotely park the intelligent driving device outside the intelligent driving device. For the AVP, the intelligent driving device may complete parking without the driver. From a perspective of a corresponding autonomous driving level, the APA is approximately at the level L2, the RPA is approximately at the level L2 or L3, and the AVP is approximately at the level L4.

In embodiments of this application, the computing platform 150 may determine, based on obstacle information obtained by the sensing system 120, whether to switch a planning mode. When the intelligent driving device 100 is trapped, the computing platform 150 may further control the intelligent driving device 100 to be parked into a roadside area, to prevent the intelligent driving device 100 from blocking traffic.

The intelligent driving device in embodiments of this application may include a transportation tool on a road, a transportation tool on water, an air transportation tool, an industrial device, an agricultural device, an entertainment device, or the like. For example, the intelligent driving device may be a vehicle. The vehicle is a vehicle in a broad sense, and may be a transportation tool (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application.

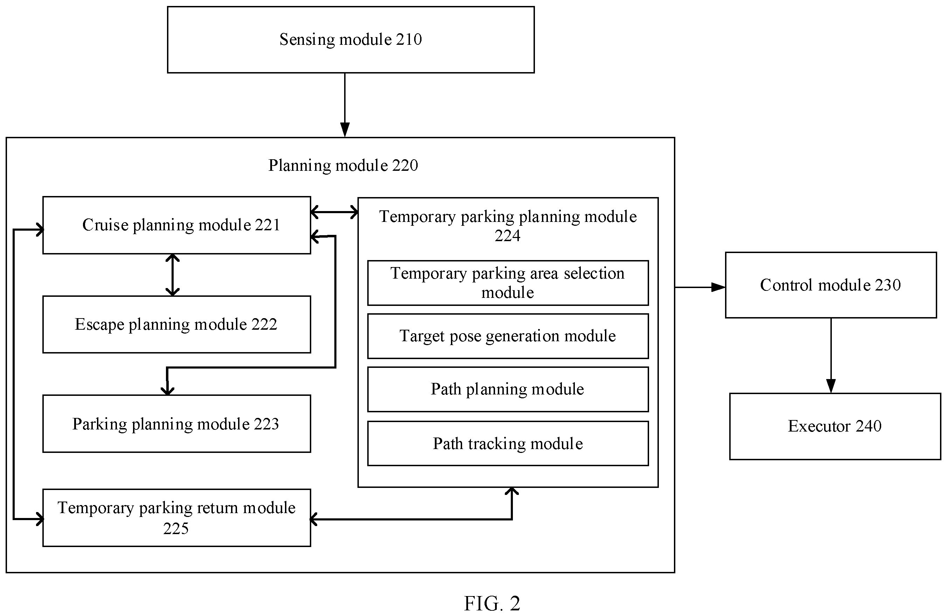

FIG. 2 is a diagram of an architecture of a control system according to an embodiment of this application. As shown in FIG. 2, the system includes a sensing module 210, a planning module 220, a control module 230, and an executor 240. The sensing module 210 may include one or more sensors in the sensing system 120 shown in FIG. 1, and the planning module 220 and the control module 230 each may be one or more processors in the computing platform 150 shown in FIG. 1.

The sensing module 210 is configured to collect environment information around an intelligent driving device. The environment information includes information such as a location of an obstacle around the intelligent driving device. The sensing module 210 may input the information about the obstacle into the planning module 220.

The planning module 220 includes a cruise planning module 221, an escape planning module 222, a parking planning module 223, a temporary parking planning module 224, and a temporary parking return planning module 225.

The cruise planning module 221 is configured to: plan a parking cruise path for the intelligent driving device, where the parking cruise path indicates the intelligent driving device to travel from a current location to a target parking area, or the parking cruise path indicates the intelligent driving device to travel from the target parking area to a location of a driver of the intelligent driving device; when the intelligent driving device cannot continue to travel along the parking cruise path due to an obstacle in a parking cruise process, switch to the escape planning module 222 to perform escape path planning; and when the intelligent driving device travels along the parking cruise path to the vicinity of the target parking area, switch to the parking planning module 223 to perform parking path planning.

The escape planning module 222 is configured to: plan an escape path for the intelligent driving device when the intelligent driving device is trapped, where the escape path indicates the intelligent driving device to bypass the obstacle that traps the intelligent driving device and continue to travel; when the intelligent driving device travels along the escape path to successfully escape, switch to the cruise planning module 221 to continue to perform parking cruise path planning; and when planning of the escape path fails, or when the intelligent driving device cannot travel along the escape path to escape, switch to the temporary parking planning module 224 to perform temporary parking path planning.

The parking planning module 223 is configured to: plan a pose and a path for the intelligent driving device to travel into the target parking area; when the intelligent driving device is successfully parked into the target parking area, end the parking procedure; and when the intelligent driving device fails to perform parking, switch to the cruise planning module 221 to continue to perform parking cruise path planning.

The temporary parking planning module 224 includes a temporary parking area selection module, a target pose generation module, a path planning module, and a path tracking module. The temporary parking area selection module is configured to select one target temporary parking area from one or more temporary parking areas, where the one or more temporary parking areas are located in a preset range of the intelligent driving device, and a distance between each of the one or more temporary parking areas and a first boundary of a road section on which the intelligent driving device is currently located is less than or equal to a first threshold. For example, the temporary parking area selection module may select the target temporary parking area based on a degree of obstruction caused by the one or more temporary parking areas to road traffic. The target pose generation module is configured to: generate a target pose of the intelligent driving device in the target temporary parking area, and adjust the target pose in real time. The path planning module is configured to plan a temporary parking path for the intelligent driving device to travel from a current pose to the target pose. The path tracking module is configured to: monitor a traveling status of the intelligent driving device; when the intelligent driving device travels into the target temporary parking area in the target pose, switch to the temporary parking return module 225 to perform temporary parking return path planning; and when the intelligent driving device fails to be parked temporarily, switch to the cruise planning module 221 to continue to perform parking cruise path planning.

The temporary parking return planning module 225 is configured to: monitor a road environment around a temporary parking area in which the intelligent driving device is located, where when a traffic capacity of a road is restored, the temporary parking return planning module 225 plans, for the intelligent driving device based on a road boundary, a temporary parking return path from the temporary parking area to a target pulling-out area, and the target pulling-out area is used by the intelligent driving device to continue to travel on the road; when the intelligent driving device successfully travels into the target parking area, switch to the cruise planning module 221 to continue to perform parking cruise path planning; and when the intelligent driving device fails to perform temporary parking return, switch to the temporary parking planning module 224 to perform temporary parking path planning.

The control module 230 may calculate a corresponding control value based on a path planned by the planning module 220, and output the control value to the executor 240. When the executor 240 executes the control value, the vehicle is controlled to travel along the planned path. In some possible implementations, the executor may include a steering system and a braking control system in the intelligent driving device 100.

It should be understood that the foregoing modules are merely examples. In actual application, the foregoing modules may be added or deleted based on an actual requirement. For example, in the system architecture shown in FIG. 2, the cruise planning module 221, the escape planning module 222, the parking planning module 223, the temporary parking planning module 224, and the temporary parking return planning module 225 may be combined into one module, or the planning module 220 and the control module 230 may be combined into one module. For another example, the system further includes a prompt module. The prompt module receives information from the planning module 220. When the planning module 220 performs mode switching, the prompt module sends prompt information to prompt for occurrence of mode switching.

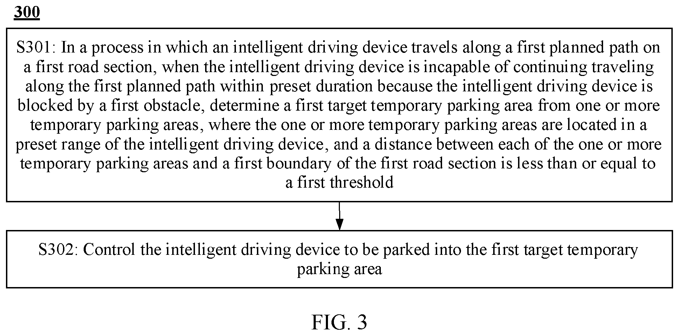

FIG. 3 is a schematic flowchart of an auto parking method according to an embodiment of this application. The method may be applied to the intelligent driving device shown in FIG. 1, or the method may be performed by the system shown in FIG. 2. For example, the method may be performed by the planning module 220. The method 300 may include S301 and S302.

S301: In a process in which an intelligent driving device travels along a first planned path on a first road section, when the intelligent driving device is incapable of continuing traveling along the first planned path within first duration because the intelligent driving device is blocked by a first obstacle, determine a first target temporary parking area, where the first target temporary parking area is located in a first range of the intelligent driving device, and a distance between the first target temporary parking area and a first boundary of the first road section is less than or equal to a first threshold.

For example, the first road section may be a road section through which the intelligent driving device travels from a current location to a target parking area, or the first road section may be a road section through which the intelligent driving device travels from a parking area to a location of a driver.

In some implementations, the first planned path is any one of the following: a path indicating the intelligent driving device to travel from the current location to the target parking area, a path indicating the intelligent driving device to travel from the target parking area to the location of the driver of the intelligent driving device, or a path indicating the intelligent driving device to travel from a third temporary parking area to a target pulling-out area. The third temporary parking area is an area in which the intelligent driving device is parked before the intelligent driving device travels along the first planned path.

It should be noted that the location of the driver may be an actual location of the driver, or may be a location specified by the driver.

For example, the first planned path may include the parking cruise path or the temporary parking return path in the foregoing embodiments. The first duration may be five seconds, seven seconds, or other duration. The first range may include a range within 10 meters of an outer contour of the intelligent driving device, or may be another range. The first boundary of the first road section may be a left boundary of a unidirectional lane or a right boundary of the unidirectional lane. The first boundary may be a boundary determined based on a road shoulder, or may be a boundary determined based on a green belt or an isolation belt. The road shoulder may include but is not limited to a hard road shoulder and a protective road shoulder. When the first road section is a road section in an indoor parking lot, the first boundary may alternatively be a boundary determined based on a wall or a parking space line. In some implementations, when two boundaries of the first road section are respectively boundaries formed by a double yellow line and a road shoulder, the first boundary is the boundary formed by the road shoulder.

For example, the distance between the first target temporary parking area and the first boundary is a distance between the first boundary and a boundary that is of the first target temporary parking area and that is closest to the first boundary. The first threshold may be 10 centimeters, or the first threshold may be 15 centimeters, or the first threshold may be another value.

In some implementations, one or more temporary parking areas are obtained, where the one or more temporary parking areas are located in the first range of the intelligent driving device, and a distance between each of the one or more temporary parking areas and the first boundary is less than or equal to the first threshold.

In some implementations, the first target temporary parking area is determined from the one or more temporary parking areas based on a location and/or a type of each temporary parking area. The type of the temporary parking area indicates whether the temporary parking area is determined based on a parking space structure line. The parking space structure line includes a parking space line and a protruding edge at a boundary of a mechanical parking space.

In an example, there are two temporary parking areas: One temporary parking area is determined based on the parking space structure line, and the other temporary parking area is not determined based on the parking space structure line. In this case, the temporary parking area determined based on the parking space structure line is determined as the target temporary parking area. The temporary parking area that is not determined based on the parking space structure line may be a blank area determined based on an obstacle location, or the temporary parking area that is not determined based on the parking space structure line may be a temporary parking area determined in another manner. In another example, there are two temporary parking areas, and types of the two temporary parking areas are the same. In this case, it is determined that a temporary parking area into which the intelligent driving device is more easily to be parked is the target temporary parking area. A difficulty degree of parking into the temporary parking area may be determined based on a quantity of times of parking adjustment. In another example, a degree of traffic congestion caused by each temporary parking area on the first road section is determined, and a temporary parking area with a lowest degree of traffic congestion on the first road section in 3the one or more temporary parking areas is further determined as the first target temporary parking area. In another example, a parking difficulty degree of each temporary parking area may be further determined, and a temporary parking area with a low parking difficulty degree is determined as the first target temporary parking area.

During specific implementation, the first target temporary parking area may be determined by using any one of the foregoing examples, or the first target temporary parking area may be determined by using a combination of two or more of the foregoing examples.

In some implementations, the degree of traffic congestion caused by the temporary parking area on the first road section may be determined based on the location and/or the type of the temporary parking area. For example, compared with the temporary parking area that is not determined based on the parking space structure line, the temporary parking area determined based on the parking space structure line causes a lower degree of traffic congestion on the first road section. The degree of traffic congestion caused by the temporary parking area on the first road section may be further determined based on a distance between the temporary parking area and a particular sign. The particular sign includes an area that has great impact on traffic, for example, a bus station or an intersection. For example, compared with a temporary parking area that is farther away from the particular sign, a temporary parking area that is closer to the particular sign causes a higher degree of traffic congestion on the first road section.

S302: Control the intelligent driving device to be parked into the first target temporary parking area.

In some implementations, when the intelligent driving device fails to be parked into the first target temporary parking area, a second planned path is determined based on the obstacle on the first road section, and the intelligent driving device is controlled to travel along the second planned path.

For example, the second planned path may be the parking cruise path in the foregoing embodiments.

That the intelligent driving device fails to be parked into the first target temporary parking area may include the following cases: Planning of a path from the current location of the intelligent driving device to the first target temporary parking area fails, or the intelligent driving device cannot travel into the first target temporary parking area in a target pose.

In some implementations, after the intelligent driving device is parked into the first target temporary parking area, the intelligent driving device is controlled, based on a road boundary of the first road section, to travel into a first target pulling-out area, where the first target pulling-out area is used by the intelligent driving device to continue to travel on the first road section.

A traffic capacity of the first road section indicates a quantity of vehicles passing through the first road section in unit time. For example, a traffic capacity threshold may be that five vehicles pass within 1 minute, or the traffic capacity threshold may be that 10 vehicles pass within 1 minute, or the traffic capacity threshold may be another value.

For example, the first target pulling-out area may be an area in which a target pulling-out pose is located and that is determined based on the road boundary of the first road section.

For example, a distance between the first target pulling-out area and the boundary of the first road section is greater than or equal to a preset distance. For example, the preset distance may be 0.5 meter, 1.5 meters, or another value.

In some implementations, when the intelligent driving device fails to travel into the first target pulling-out area, the intelligent driving device is controlled to be parked into a second target temporary parking area, where the second target temporary parking area is located in a second range of the intelligent driving device, and a distance between the second target temporary parking area and a second boundary of the first road section is less than or equal to a second threshold.

That the intelligent driving device fails to be parked into the first target pulling-out area may include the following cases: Planning of a path from the current temporary parking area of the intelligent driving device to the first target pulling-out area fails, or the intelligent driving device cannot travel into the first target pulling-out area in a target pose.

During specific implementation, the second target temporary parking area and the first target temporary parking area may be a same area, the second boundary and the first boundary may be a same boundary, the second range and the first range may be a same range, and the second threshold and the first threshold may be a same value.

According to the auto parking method provided in embodiments of this application, when the intelligent driving device is blocked by an obstacle and cannot continue to travel along a planned path, the intelligent driving device may be controlled to be parked into a temporary parking area, to reduce a degree of obstruction to traffic. After the intelligent driving device is parked into the temporary parking area and the traffic capacity of the first road section is restored, the vehicle may be controlled to be pulled out of the temporary parking area to continue to travel. This helps improve intelligence of auto parking and improve an auto parking success rate.

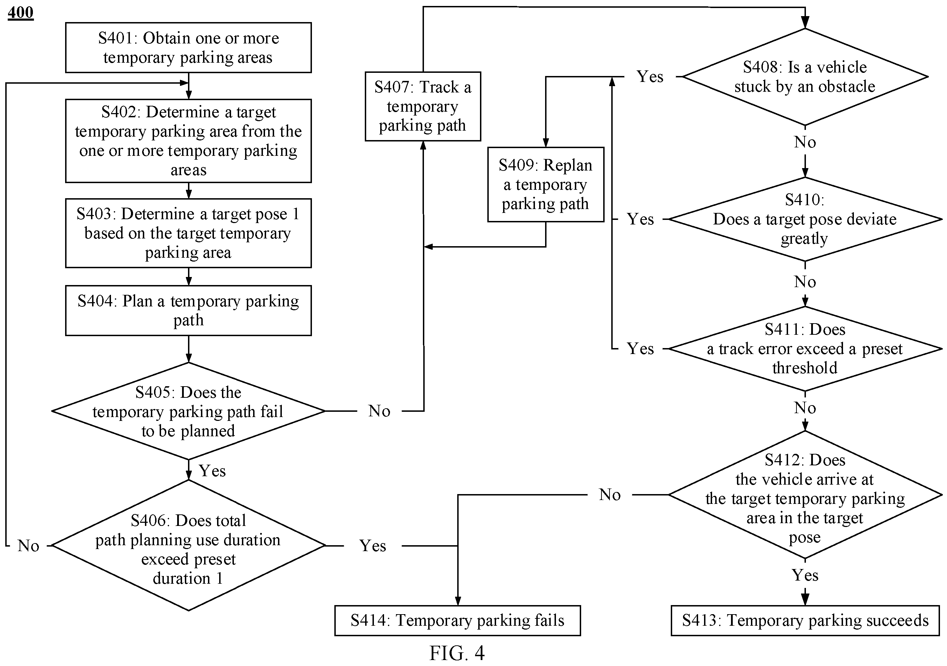

The following describes in detail the auto parking method in the method 300 with reference to FIG. 4 to FIG. 6.

FIG. 4 is another schematic flowchart of an auto parking method according to an embodiment of this application. The method 400 may be considered as an extension of the method 300 or a further description of the method 300. The method 400 includes S401 to S414. The method 400 is described by using an example in which the intelligent driving device is a vehicle.

S401: Obtain one or more temporary parking areas.

For example, the one or more temporary parking areas may be the one or more temporary parking areas in the foregoing embodiments.

S402: Determine a target temporary parking area from the one or more temporary parking areas.

For example, the target temporary parking area may be an example of the first target temporary parking area, or may be an example of the second target temporary parking area. For a method for determining the target temporary parking area from the one or more temporary parking areas, refer to the descriptions in the method 300. Details are not described herein again.

S403: Determine a target pose 1 based on the target temporary parking area.

For example, after the target pose 1 is determined based on the target temporary parking area, collision detection may be performed on the target pose 1, to determine whether the vehicle collides with an obstacle around the target pose 1 when the vehicle is in the target pose 1. After collision detection on the target pose 1 succeeds, S404 is performed.

For example, collision detection may be performed according to a GJK (Gilbert-Johnson-Keerthi) algorithm, or collision detection may be performed according to a separating axis theorem (separating axis theorem, SAT), or collision detection may be performed according to another method.

S404: Plan a temporary parking path.

For example, a path from a current pose of the vehicle to the target pose 1 may be generated according to a path search planning algorithm or a geometric method, and the path is the temporary parking path. The path search planning algorithm may be an A* (A-star) algorithm, a hybrid A* algorithm, or an ultrafast A* algorithm.

S405: Determine whether the temporary parking path fails to be planned.

Specifically, when the temporary parking path fails to be planned, S406 is performed; otherwise, S407 is performed.

For example, if the temporary parking path is generated according to the path search planning algorithm, when a path search fails or duration required for a single path search exceeds preset duration, it is determined that the temporary parking path fails to be planned. The preset duration may be 5 seconds, 10 seconds, or other duration.

S406: Determine whether total path planning use duration exceeds preset duration 1.

Specifically, when the total path planning use duration exceeds the preset duration 1, it is determined that temporary parking fails (S414); otherwise, S402 is performed, that is, a target temporary parking area is reselected.

The total path planning use duration may be total duration starting from determining the target temporary parking area for the first time. For example, the preset duration 1 may be 1 minute, 2 minutes, or other duration.

For example, "the total path planning use duration exceeds the preset duration 1" may be understood as an example in which "planning of a path from the current location of the intelligent driving device to the first target temporary parking area fails".

S407: Track the temporary parking path.

For example, the temporary parking path may be tracked according to an algorithm like a pure pursuit (pure pursuit, PP) control algorithm, a Stanley (Stanley) control algorithm, a proportional-integral-derivative (proportional-integral-derivative, PID) control algorithm, or a model predictive control algorithm.

S408: Determine whether the vehicle is stuck by an obstacle.

That the vehicle is stuck by the obstacle may be understood as that there is an obstacle in the temporary parking path, so that the vehicle cannot continue to travel along the temporary parking path.

For example, when the vehicle is not stuck by the obstacle, S410 is performed; otherwise, S409 is performed.

S409: Replan a temporary parking path.

In some possible implementations, when the temporary parking path is replanned, a horizontal/vertical location of the target pose 1 and an attitude angle of the target pose 1 may be adjusted to obtain a new target pose, and the temporary parking path is replanned based on the new target pose.

When the temporary parking path fails to be replanned, if total path planning use duration exceeds the preset duration 1, it is determined that temporary parking fails (S414); or if the temporary parking path succeeds to be replanned, S407 continues to be performed.

For a more specific implementation of replanning the temporary parking path, refer to the descriptions in S404 to S406. Details are not described herein again.

S410: Determine whether a target pose deviates greatly.

For example, the target pose may be the target pose 1, or may be the new target pose obtained by adjusting the target pose 1.

For example, in a traveling process of the vehicle, because there may be a deviation between an actual traveling path of the vehicle and the planned temporary parking path, a predicted pose may be periodically generated in a process of tracking the temporary parking path. The predicted pose is a possible pose when the vehicle continues to travel along a temporary parking trajectory to the target temporary parking area. When a location and/or an attitude angle between the predicted pose and the target pose differ greatly, it is determined that the target pose deviates greatly. Specifically, when the target pose deviates greatly, S409 is performed; otherwise, S411 is performed.

S411: Determine whether a track error (track error) exceeds a preset threshold.

For example, the track error may be a deviation between a current horizontal location of the vehicle and a horizontal location of the planned temporary parking path. The preset threshold may be 5%, 10%, or another value.

Specifically, when the track error exceeds the preset threshold, S409 is performed; otherwise, S412 is performed.

S412: Arrive at the target temporary parking area in the target pose.

Specifically, when the vehicle arrives at the target temporary parking area in the target pose, it is determined that temporary parking succeeds (S413); otherwise, it is determined that temporary parking fails (S414).

It should be noted that, when S408, S410, and S411 are all no, when the vehicle does not arrive at the target temporary parking area in the target pose in S412, the planned path cannot be tracked because the vehicle stops for an excessively long time at a time point. In this case, it is determined that temporary parking fails.

S413: Temporary parking succeeds.

S414: Temporary parking fails.

The auto parking method provided in embodiments of this application may be applied to an auto parking scenario, for example, on a way in which the vehicle travels to a target parking area, or on a way in which the vehicle travels to a location of a driver after the vehicle is pulled out of the target parking area.

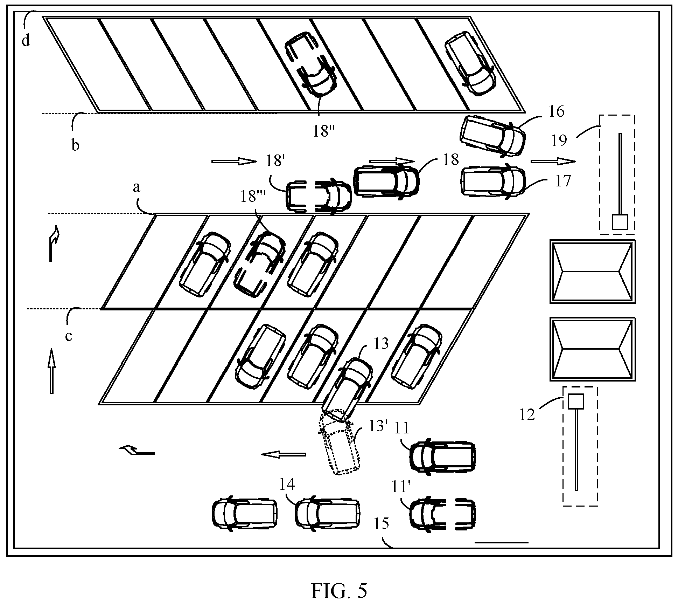

FIG. 5 is a diagram of an application scenario of an auto parking method according to an embodiment of this application. FIG. 5 is a schematic plan view of a parking lot. The parking lot includes an entrance gate 12 and an exit gate 19.

In some implementations, it is assumed that a vehicle 11 enters from the entrance gate 12. In a parking cruise process in the parking lot, a vehicle 13 is in a parking adjustment state, the vehicle 13 may travel to a location 13', there is a parked vehicle 14 on the left front of the vehicle 11, and existence of the vehicle 13 and the vehicle 14 prevents the vehicle 11 from continuing to travel forward. In this case, the vehicle 11 may perform the method 300 or the method 400, to be parked at a location 11', to reduce traffic obstruction at an entrance of the parking lot. A road on which the vehicle 11 is currently located may be understood as an example of the first road section, and the first boundary of the first road section may be determined based on a wall 15. The vehicle 13 and the vehicle 14 may be understood as an example of the first obstacle. The location 11' may be understood as an example of the first target parking area.

In some other implementations, it is assumed that a vehicle 18 is pulled out of a parking space and is ready to travel out of the parking lot, but s vehicle 16 and a vehicle 17 prevent the vehicle 18 from continuing to travel forward. In this case, the vehicle 18 may perform the method 300 or the method 400, to be parked at a location 18', a location 18", or a location 18‴, to reduce traffic obstruction at an exit of the parking lot. The vehicle 16 and the vehicle 17 may be understood as examples of the first obstacle. A road on which the vehicle 18 is currently located may be understood as an example of the first road section. It is assumed that boundaries of the first road section may be a boundary a and a boundary b that are determined based on a parking space line, and the location 18' may be understood as an example of the first target parking area. For example, when there is a parking space that is around the vehicle 18 and in which no vehicle is parked, the boundaries of the first road section may alternatively be a boundary c and a boundary d that are determined based on a parking space line and a wall, and the location 18" and the location 18‴ may be understood as some other examples of the first target parking area.

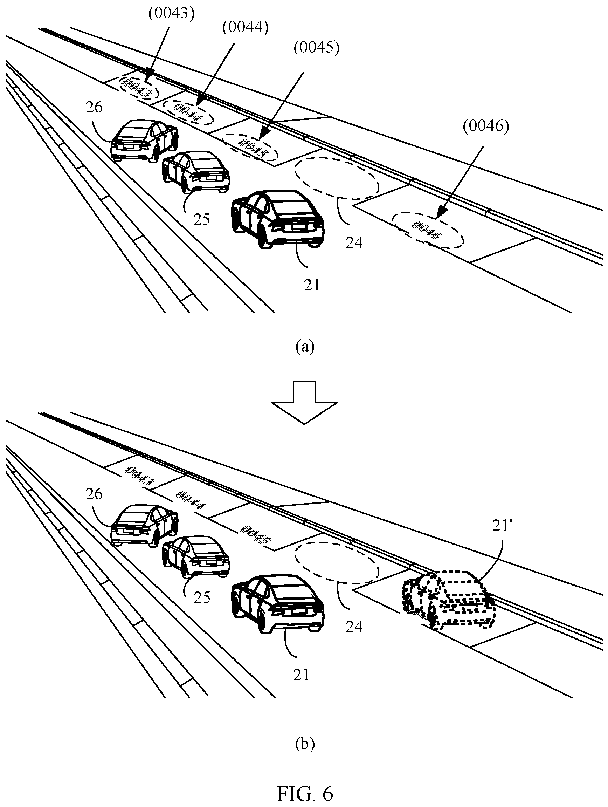

FIG. 6 is a diagram of another application scenario of an auto parking method according to an embodiment of this application. (a) and (b) in FIG. 6 are diagrams of a one-way road. Roadside parking spaces numbered "0043", "0044", "0045", and "0046" are disposed on a roadside of the road. In addition, there is a blank area 24 that can be used for parking between a parking space numbered "0045" and a parking space numbered "0046". When a vehicle 21 travels on the current road, and the vehicle 21 cannot travel forward because a vehicle 25 collides with a vehicle 26 or the vehicle 25 or the vehicle 26 is faulty, the vehicle 21 may perform the method 300 or the method 400, to be parked at a location 21'. The road on which the vehicle 21 is currently located may be understood as an example of the first road section. The vehicle 25 and/or the vehicle 26 may be understood as an example of the first obstacle. If the first boundary may be a boundary determined based on a road shoulder that is of the road and that is on the right side of the vehicle 21, the parking space numbered "0046" may be understood as an example of the first target parking area.

After the vehicle is parked into the target parking area, the vehicle may monitor a traffic status of the first road section, and then return to the first road section in a timely manner to continue to travel.

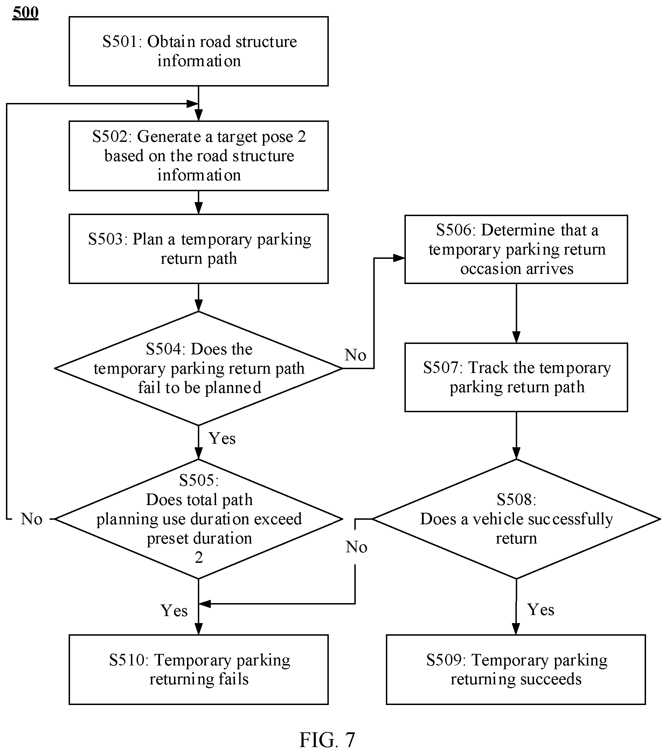

FIG. 7 is another schematic flowchart of an auto parking method according to an embodiment of this application. The method 500 may be considered as an extension of the method 300, and the method 500 may be performed after the method 300 or the method 400. For example, the method 500 may be performed after S302 or S414. The method 500 includes S501 to S510.

S501: Obtain road structure information.

For example, the road structure information may indicate a road boundary of a first road section.

S502: Generate a target pose 2 based on the road structure information.

For example, a pulling-out guide line may be generated based on the road structure information, and the target pose 2 may be generated based on the pulling-out guide line and an obstacle location on the first road section. The pulling-out guide line may be a road center line of the first road section.

For example, a method for generating the target pose 2 based on the pulling-out guide line and the obstacle location may be as follows:

A seed point is determined based on information about the pulling-out guide line. The seed point may include a location and a posture at which most users habitually park vehicles when the users control the vehicles to be pulled out of parking spaces. The seed point may be determined according to a big data algorithm, or may be determined in another manner. The seed point may satisfy the following condition: On a premise that the obstacle location on the road is not considered, after the vehicle is pulled out to the seed point, a pose of a vehicle at the seed point can enable a traveling direction of the vehicle to be parallel to a road tangent. A pulling-out pose area is determined based on the seed point, the pulling-out pose area is further discretized. Starting from the seed point, traversal-based point generation is performed, to obtain a pulling-out pose set. The set includes one or more pulling-out poses. Further, a feasible pulling-out pose that is in the pulling-out pose set and that is closest to the seed point is determined as the target pose 2 based on the obstacle location on the first road section according to an A* detection algorithm. The foregoing "feasible" indicates that an obstacle does not affect the vehicle to travel from a temporary parking area to an area indicated by the target pose 2.

S503: Plan a temporary parking return path.

For example, a path from a current pose of the vehicle to the target pose 2 may be generated according to a path search planning algorithm or a geometric method, and the path is the temporary parking return path.

S504: Determine whether the temporary parking return path fails to be planned.

Specifically, when the temporary parking return path fails to be planned, S406 is performed; otherwise, S407 is performed.

For example, if the temporary parking return path is generated according to the path search planning algorithm, when a path search fails or duration required for a single path search exceeds preset duration, it is determined that the temporary parking path fails to be planned. The preset duration may be 5 seconds, 10 seconds, or other duration.

S505: Determine whether duration required for path planning exceeds preset duration 2.

Specifically, when the total path planning use duration exceeds the preset duration 2, it is determined that temporary parking returning fails (S510); otherwise, S502 is performed, that is, a target pose is regenerated.

The total path planning use duration may be total duration starting from generating the target pose 2 for the first time. For example, the preset duration 2 may be 1 minute, 2 minutes, or other duration.

For example, "the total path planning use duration exceeds the preset duration 2" may be understood as an example in which "planning of a path from the current temporary parking area of the intelligent driving device to the first target pulling-out area fails".

S506: Determine that a temporary parking return occasion arrives.

In an example, when it is detected that obstruction of a first obstacle to a first planned path is eliminated, or when a traffic capacity of the first road section is greater than or equal to a traffic capacity threshold, it is determined that the temporary parking return occasion arrives.

In another example, a quick search algorithm (for example, a quick A* detection algorithm) may be used to perform quick search calculation on a plurality of target poses in a preset range of the first road section based on the current pose of the vehicle as a start point. If the series of calculations are all successful and are not truncated by searching and collision detection, it is determined that the temporary parking return occasion arrives.

S507: Track the temporary parking return path.

For example, the temporary parking return path may be tracked according to an algorithm like a PP control algorithm, a Stanley control algorithm, a PID control algorithm, or a model prediction control algorithm.

S508: Determine whether the vehicle successfully returns.

When the vehicle travels to the target pose 2, it is determined that the vehicle successfully returns (S509); otherwise, it is determined that the vehicle fails to return (S510).

S509: Temporary parking returning succeeds.

S510: Temporary parking returning fails.

For example, after temporary parking returning of the vehicle succeeds, parking cruise path planning continues to be performed.

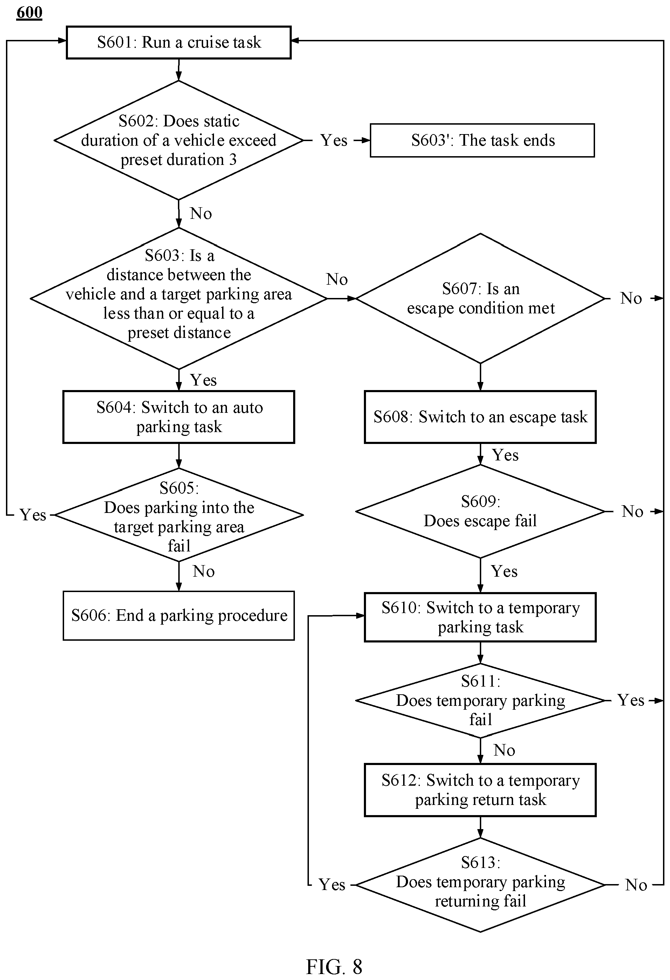

To make a reader clearer about a relationship between the method 400, the method 500, and the parking cruise provided in embodiments of this application, the following describes, with reference to FIG. 8, how to switch between tasks in a process in which a vehicle is parked into a target parking area. It should be noted that a task is an abstract concept of a time segment of a thread. A task is in a one-to-one correspondence with a time segment of a thread, that is, one time segment of one thread is one task.

The method 600 shown in FIG. 8 may be applied to the intelligent driving device shown in FIG. 1, or the method may be performed by the system shown in FIG. 2. For example, the method may be performed by the planning module 220. The method 600 may include S601 to S612.

S601: Run a cruise task.

For example, the cruise task may be executed by the cruise planning module 221 shown in FIG. 2, and running of the cruise task enables a vehicle to travel along a parking cruise path. For a method for planning the parking cruise path, refer to related descriptions of planning the temporary parking path and the temporary parking return path. Details are not described herein again.

S602: Determine that static duration of the vehicle exceeds preset duration 3.

In some implementations, an ambient environment of the vehicle is excessively complex. As a result, path planning may exceed a capability boundary of an algorithm used for path planning in the vehicle, and the vehicle is stationary for an ultra-long time.

For example, the preset duration 3 may be 5 minutes, 6 minutes, or other duration. For example, the preset duration 3 is greater than the preset duration 2, and the preset duration 2 is greater than the preset duration 1.

Specifically, when the static duration of the vehicle exceeds the preset duration 3, it is determined that the cruise task ends; otherwise, S603 is performed.

S603': The task ends.

S603: Determine whether a distance between the vehicle and a target parking area is less than or equal to a preset distance.

For example, the distance between the vehicle and the target parking area may be a shortest distance between an outer contour of the vehicle and a boundary of the target parking area, or may be a distance between a center of the vehicle and a center of the target parking area.

For example, the preset distance may be 3 meters, 5 meters, or another distance.

Specifically, when the distance between the vehicle and the target parking area is less than or equal to the preset distance, S604 is performed; otherwise, S607 is performed.

S604: Switch to an auto parking task.

For example, the auto parking task may be executed by the parking planning module 223 shown in FIG. 2, and running of the auto parking task enables the vehicle to travel towards the target parking area.

S605: Determine whether parking into the target parking area fails.

Specifically, when parking into the target parking area fails, S601 is performed; otherwise, S606 is performed.

S606: End the parking procedure.

For example, after the parking procedure ends, the vehicle is powered off and turned off.

S607: Determine whether an escape condition is met.

Specifically, if the escape condition is met, S608 is performed; otherwise, S601 is performed.

S608: Switch to an escape task.

For example, the escape task may be executed by the escape planning module 222 shown in FIG. 2, and running of the escape task enables the vehicle to travel along an escape planning path.

S609: Determine whether escape fails.

For example, when the vehicle cannot escape, it is determined that escape fails; or when the vehicle escapes, it is determined that escape succeeds.

Specifically, when escape fails, S610 is performed; otherwise, 601 is performed.

S610: Switch to a temporary parking task.

For example, the temporary parking task may be executed by the temporary parking planning module 224 shown in FIG. 2, and running of the temporary parking task enables the vehicle to travel to a target temporary parking area along a temporary parking path. For a more specific method for controlling the vehicle to travel to the target temporary parking area, refer to the descriptions in the method 400. Details are not described herein again.

S611: Determine whether temporary parking fails.

For a cause of the temporary parking failure, refer to the descriptions in the method 400. Details are not described herein again.

Specifically, when temporary parking fails, S601 is performed; otherwise, S612 is performed.

S612: Switch to a temporary parking return task.

For example, the temporary parking return task may be executed by the temporary parking return planning module 225 shown in FIG. 2, and running of the temporary parking return task enables the vehicle to travel out of the target temporary parking area. For a more specific method for controlling the vehicle to travel out of the target temporary parking area, refer to the descriptions in the method 500. Details are not described herein again.

S613: Determine whether temporary parking returning fails.

For a cause of the temporary parking failure, refer to the descriptions in the method 500. Details are not described herein again.

Specifically, when temporary parking returning fails, S610 is performed; otherwise, S601 is performed.

According to the auto parking method provided in embodiments of this application, in an auto parking process, switching between a plurality of tasks may be performed based on an actual road condition, to improve a parking success rate. In addition, the auto parking method in the foregoing embodiments further helps improve a human-like degree of auto parking.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

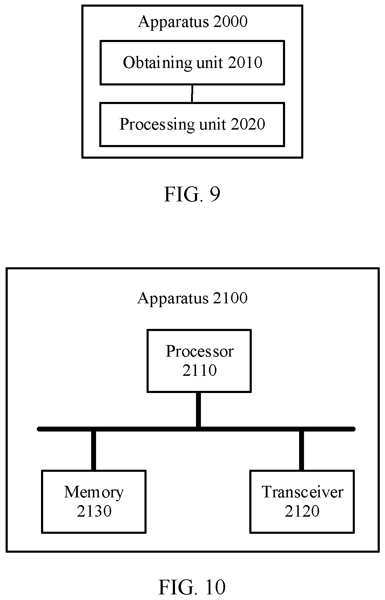

The auto parking methods provided in embodiments of this application are described above in detail with reference to FIG. 1 to FIG. 8. Auto parking apparatuses provided in embodiments of this application are described below in detail with reference to FIG. 9 and FIG. 10. It should be understood that descriptions of auto parking apparatus embodiments correspond to the descriptions of the method embodiments. Therefore, for content that is not described in detail, refer to the method embodiments. For brevity, details are not described herein again.

FIG. 9 is a block diagram of an auto parking apparatus 2000 according to an embodiment of this application. The apparatus 2000 may include units configured to perform the method 300, the method 400, the method 500, and the method 600. In addition, the units in the apparatus 2000 are configured to implement corresponding procedures in embodiments of the method 300, the method 400, the method 500, and the method 600.

Specifically, the apparatus 2000 includes a determining unit 2010 and a processing unit 2020. The determining unit 2010 is configured to: in a process in which an intelligent driving device travels along a first planned path on a first road section, when the intelligent driving device is incapable of continuing traveling along the first planned path within first duration because the intelligent driving device is blocked by a first obstacle, determine a first target temporary parking area, where the first target temporary parking area is located in a first range of the intelligent driving device, and a distance between the first target temporary parking area and a first boundary of the first road section is less than or equal to a first threshold. The processing unit 2020 is configured to control the intelligent driving device to be parked into the first target temporary parking area.

In some implementations, the apparatus further includes an obtaining unit. The obtaining unit is configured to obtain information about one or more temporary parking areas, where the one or more temporary parking areas are located in the first range of the intelligent driving device, and a distance between each of the one or more temporary parking areas and the first boundary is less than or equal to the first threshold. The determining unit 2010 is configured to determine the first target temporary parking area from the one or more temporary parking areas based on a location and/or a type of each temporary parking area, where the type of the temporary parking area indicates whether the temporary parking area is determined based on a parking space structure line.

In some implementations, the one or more temporary parking areas include a first temporary parking area and a second temporary parking area, the first temporary parking area is a temporary parking area determined based on the parking space structure line, and the second temporary parking area is not a temporary parking area determined based on the parking space structure line. The determining unit 2010 is configured to determine the first temporary parking area as the first target temporary parking area.

In some implementations, the determining unit 2010 is further configured to: when the intelligent driving device fails to be parked into the first target temporary parking area, determine a second planned path based on the obstacle on the first road section. The processing unit 2020 is further configured to control the intelligent driving device to travel along the second planned path.

In some implementations, after the intelligent driving device is parked into the first target temporary parking area, the processing unit 2020 is further configured to control, based on a road boundary of the first road section, the intelligent driving device to travel into a first target pulling-out area, where the first target pulling-out area is used by the intelligent driving device to continue to travel on the first road section.

In some implementations, the processing unit 2020 is further configured to: when the intelligent driving device fails to travel into the first target pulling-out area, control the intelligent driving device to be parked into a second target temporary parking area, where the second target temporary parking area is located in a second range of the intelligent driving device, and a distance between the second target temporary parking area and a second boundary of the first road section is less than or equal to a second threshold.

In some implementations, the first planned path is any one of the following: a path indicating the intelligent driving device to travel from a current location to a target parking area, a path indicating the intelligent driving device to travel from the target parking area to a location of a driver of the intelligent driving device, or a path indicating the intelligent driving device to travel from a third temporary parking area to a target pulling-out area, where the third temporary parking area is an area in which the intelligent driving device is parked before the intelligent driving device travels along the first planned path.

For example, the determining unit 2010 and the processing unit 2020 may be disposed in the system shown in FIG. 2. More specifically, the determining unit 2010 may be disposed in the planning module 220, and the processing unit 2020 may be disposed in the control module 230. For example, operations performed by the determining unit 2010 and the processing unit 2020 may be performed by one processor, or may be performed by different processors. In a specific implementation process, the one or more processors may be a processor disposed in the intelligent driving device 100 shown in FIG. 1. Alternatively, the apparatus 2000 may be a chip disposed in the intelligent driving device 100.

In a specific implementation process, all or some of the units in the foregoing apparatus may be integrated together, or may be implemented independently. In an implementation, these units are integrated together and implemented in a form of a system-on-a-chip (system-on-a-chip, SoC).

FIG. 10 is another block diagram of an auto parking apparatus according to an embodiment of this application. The auto parking apparatus 2100 shown in FIG. 10 may include a processor 2110, a transceiver 2120, and a memory 2130. The processor 2110, the transceiver 2120, and the memory 2130 are connected through an internal connection path. The memory 2130 is configured to store instructions. The processor 2110 is configured to execute the instructions stored in the memory 2130, to implement the methods in the foregoing embodiments. Optionally, the memory 2130 may be coupled to the processor 2110 through an interface, or may be integrated with the processor 2110.

It should be noted that the transceiver 2120 may include but is not limited to a transceiver apparatus like an input/output interface (input/output interface), to implement communication between the apparatus 2100 and another device or a communication network.

The memory 2130 may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The transceiver 2120 uses a transceiver apparatus, for example, but not limited to, a transceiver, to implement communication between the apparatus 2110 and another device or a communication network, to receive/send data/information used to implement the methods in the foregoing embodiments.

An embodiment of this application further provides a computing platform. The computing platform includes the auto parking apparatus 2000 or the auto parking apparatus 2100 in the foregoing embodiments.

An embodiment of this application further provides an intelligent driving device. The intelligent driving device includes the computing platform in the foregoing embodiment. Alternatively, the intelligent driving device includes the auto parking apparatus 2000 or the auto parking apparatus 2100 in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In embodiments of this application, prefix words such as "first" and "second" are used only to distinguish different described objects, and do not limit a location, a sequence, a priority, a quantity, or content of described objects. In embodiments of this application, use of a prefix word, for example, an ordinal number, used to distinguish described objects does not constitute a limitation on the described objects. For descriptions of the described objects, refer to the descriptions of the context in the claims or embodiments. The use of such a prefix word should not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An auto parking method, comprising:
in a process in which an intelligent driving device travels along a first planned path on a first road section, when the intelligent driving device is incapable of continuing traveling along the first planned path within first duration because the intelligent driving device is blocked by a first obstacle, determining a first target temporary parking area, wherein the first target temporary parking area is located in a first range of the intelligent driving device, and a distance between the first target temporary parking area and a first boundary of the first road section is less than or equal to a first threshold; and
controlling the intelligent driving device to be parked into the first target temporary parking area.

2. The method according to claim 1, wherein the method further comprises:
obtaining information about one or more temporary parking areas, wherein the one or more temporary parking areas are located in the first range of the intelligent driving device, and a distance between each of the one or more temporary parking areas and the first boundary is less than or equal to the first threshold; and
determining the first target temporary parking area comprises:
determining the first target temporary parking area from the one or more temporary parking areas based on a location and/or a type of each temporary parking area, wherein the type of the temporary parking area indicates whether the temporary parking area is determined based on a parking space structure line.

3. The method according to claim 2, wherein the one or more temporary parking areas comprise a first temporary parking area and a second temporary parking area, the first temporary parking area is a temporary parking area determined based on the parking space structure line, and the second temporary parking area is not a temporary parking area determined based on the parking space structure line; and
determining the first target temporary parking area from the one or more temporary parking areas comprises:
determining the first temporary parking area as the first target temporary parking area.

4. The method according to any one of claims 1 to 3, wherein the method further comprises:
when the intelligent driving device fails to be parked into the first target temporary parking area, determining a second planned path based on the obstacle on the first road section; and
controlling the intelligent driving device to travel along the second planned path.

5. The method according to any one of claims 1 to 3, wherein the method further comprises:
controlling, based on a road boundary of the first road section, the intelligent driving device to travel into a first target pulling-out area, wherein the first target pulling-out area is used by the intelligent driving device to continue to travel on the first road section.

6. The method according to claim 5, wherein the method further comprises:
when the intelligent driving device fails to travel into the first target pulling-out area, controlling the intelligent driving device to be parked into a second target temporary parking area, wherein the second target temporary parking area is located in a second range of the intelligent driving device, and a distance between the second target temporary parking area and a second boundary of the first road section is less than or equal to a second threshold.

7. The method according to any one of claims 1 to 6, wherein the first planned path is any one of the following: a path indicating the intelligent driving device to travel from a current location to a target parking area, a path indicating the intelligent driving device to travel from the target parking area to a location of a driver of the intelligent driving device, or a path indicating the intelligent driving device to travel from a third temporary parking area to a target pulling-out area, wherein
the third temporary parking area is an area in which the intelligent driving device is parked before the intelligent driving device travels along the first planned path.

8. An auto parking apparatus, comprising:
a determining unit, configured to: in a process in which an intelligent driving device travels along a first planned path on a first road section, when the intelligent driving device is incapable of continuing traveling along the first planned path within first duration because the intelligent driving device is blocked by a first obstacle, determine a first target temporary parking area, wherein the first target temporary parking area is located in a first range of the intelligent driving device, and a distance between the first target temporary parking area and a first boundary of the first road section is less than or equal to a first threshold; and
a processing unit, configured to control the intelligent driving device to be parked into the first target temporary parking area.

9. The apparatus according to claim 8, wherein the apparatus further comprises an obtaining unit, and the obtaining unit is configured to:
obtain information about one or more temporary parking areas, wherein the one or more temporary parking areas are located in the first range of the intelligent driving device, and a distance between each of the one or more temporary parking areas and the first boundary is less than or equal to the first threshold; and
the determining unit is configured to determine the first target temporary parking area from the one or more temporary parking areas based on a location and/or a type of each temporary parking area, wherein the type of the temporary parking area indicates whether the temporary parking area is determined based on a parking space structure line.

10. The apparatus according to claim 9, wherein the one or more temporary parking areas comprise a first temporary parking area and a second temporary parking area, the first temporary parking area is a temporary parking area determined based on the parking space structure line, and the second temporary parking area is not a temporary parking area determined based on the parking space structure line; and
the determining unit is configured to determine the first temporary parking area as the first target temporary parking area.

11. The apparatus according to any one of claims 8 to 10, wherein the determining unit is further configured to:
when the intelligent driving device fails to be parked into the first target temporary parking area, determine a second planned path based on the obstacle on the first road section; and
the processing unit is further configured to control the intelligent driving device to travel along the second planned path.

12. The apparatus according to any one of claims 8 to 10, wherein the processing unit is further configured to:
control, based on a road boundary of the first road section, the intelligent driving device to travel into a first target pulling-out area, wherein the first target pulling-out area is used by the intelligent driving device to continue to travel on the first road section.

13. The apparatus according to claim 12, wherein the processing unit is further configured to:
when the intelligent driving device fails to travel into the first target pulling-out area, control the intelligent driving device to be parked into a second target temporary parking area, wherein the second target temporary parking area is located in a second range of the intelligent driving device, and a distance between the second target temporary parking area and a second boundary of the first road section is less than or equal to a second threshold.

14. The apparatus according to any one of claims 8 to 13, wherein the first planned path is any one of the following: a path indicating the intelligent driving device to travel from a current location to a target parking area, a path indicating the intelligent driving device to travel from the target parking area to a location of a driver of the intelligent driving device, or a path indicating the intelligent driving device to travel from a third temporary parking area to a target pulling-out area, wherein
the third temporary parking area is an area in which the intelligent driving device is parked before the intelligent driving device travels along the first planned path.

15. An auto parking apparatus, comprising:
a memory, configured to store a computer program; and
a processor, configured to execute the computer program stored in the memory, to enable the apparatus to perform the method according to any one of claims 1 to 7.

16. An intelligent driving device, wherein the intelligent driving device comprises the apparatus according to any one of claims 8 to 15.

17. A computer-readable storage medium, wherein the computer-readable storage medium stores instructions, and when the instructions are executed by a processor, the processor is enabled to implement the method according to any one of claims 1 to 7.

18. A chip, wherein the chip comprises a circuit, and the circuit is configured to perform the method according to any one of claims 1 to 7.
